## Europäisches Patentamt

## European Patent Office

## Office européen des brevets

(11) Veröffentlichungsnummer: **0 360 150**
**A2**

(12) **EUROPÄISCHE PATENTANMELDUNG**

(21) Anmeldenummer: 89116998.9

(22) Anmeldetag: 14.09.89

(51) Int. Cl.⁵: **G01B 11/30 , G01N 21/47**

(30) Priorität: 20.09.88 DE 3831907

(43) Veröffentlichungstag der Anmeldung:
28.03.90 Patentblatt 90/13

(84) Benannte Vertragsstaaten:
**DE FR GB**

(71) Anmelder: **Deutsche Forschungsanstalt für Luft- und Raumfahrt e.V.**
**Linder Höhe Postfach 90 60 58**
**D-5000 Köln 90(DE)**

(72) Erfinder: **Schmitt, Dirk-Roger, Dipl.-Phys.**
**Lötzenweg 5**
**D-3300 Braunschweig(DE)**
Erfinder: **Rosteck, Helmut**
**Campestrasse 31**
**D-3340 Wolfenbüttel(DE)**

(74) Vertreter: **Gralfs, Harro, Dipl.-Ing.**
**Am Bürgerpark 8**
**D-3300 Braunschweig(DE)**

(54) **Vorrichtung zur Bestimmung der effektiven Oberflächenrauhigkeit polierter optischer Proben durch Messung der integralen Streustrahlung.**

(57) Vorrichtung zur Messung des integralen Streulichtes von polierten Glasproben mittels einer Ulbricht-Kugel. Diese Kugel ist auf ihrer Innenseite mit einem ideal streuenden Material beschichtet und weist eine dem Probenträger gegenüberliegende Strahleintrittsöffnung sowie eine Strahlaustrittsöffnung für den reflektierten Strahl auf. Die Kugel ist ferner mit einem in der Kugelwandung angeordneten Detektor für das Streulicht versehen. Der Probenträger ist in Richtung des einfallenden Strahles mit einer Öffnung und in Richtung des an der Rückseite der Probe ausfallenden Strahles hinter dieser Öffnung mit einer Lichtfalle versehen. Für die Probe ist am Probenträger eine Abdeckblende mit einer Öffnung für den einfallenden Strahl und den an der Probenoberfläche reflektierten Strahl vorgesehen. Diese Abdeckblende ist wenigstens im Bereich des von der Probenrückseite reflektierten Strahles mit einer Lichtfalle versehen oder als Lichtfalle ausgebildet.

FIG. 1

## Vorrichtung zur Bestimmung der effektiven Oberflächenrauhigkeit polierter optischer Proben durch Messung der integralen Streustrahlung

Die Erfindung bezieht sich auf eine Vorrichtung zur Bestimmung der effektiven Oberflächenrauhigkeit polierter optischer Proben durch Messung der integralen Streustrahlung nach dem Oberbegriff des Patentanspruches 1.

Zur Messung der integralen Streulichtstrahlung sind einmal Vorrichtungen bekannt, die mit einer Ulbricht-Kugel arbeiten (Z. Optik, 65 Nr. 2 (1983), S. 143 - 151; Applied Optics, Vol. 23, No. 21/1. November 1984, S. 3820 - 3835). Es sind weiter Vorrichtungen bekannt, die mit einer Coblentz-Halbkugel arbeiten (American Society for Testing Materials, ASTM designation: F, 1048-87, Standard Test Method for Measuring the Effective Surface Roughness of Optic Components by Total Integrated Scattering).

Bei den bekannten Verfahren wird die zu untersuchende Probe mit einem Laserstrahl bestimmter Wellenlänge beleuchtet, und das von der Probenoberfläche gestreute Licht wird mit der Ulbricht-Kugel bzw. der Coblentz-Halbkugel integral bestimmt und als Maß für die Bewertung der Oberflächenbeschaffenheit der Probe genommen.

Die Ulbricht-Kugel ist eine Hohlkugel, die auf ihrer Innenseite mit einem ideal streuenden Material beschichtet ist und mit einer ersten Öffnung für den Lichtstrahleintritt und einer zweiten Öffnung für den Austritt des von der Probenoberfläche reflektierten Strahles und einem verstellbaren Träger für die Halterung der Probe im Bereich der Kugelwandung versehen ist sowie einen in der Kugelwandung angeordneten Detektor für das integrale Streulicht aufweist.

Die Coblentz-Halbkugel ist eine vollständige oder annähernd vollständige Halbkugel, die auf ihrer Innenseite verspiegelt ist und mit einer ersten Öffnung für den Lichtstrahleintritt und einer zweiten Öffnung für den Austritt des von der Probe reflektierten Strahles versehen ist, in der der Lichteinfallpunkt auf der Probe seitlich gegen die Halbkugelachse versetzt liegt und der Detektor im Brennpunkt des von der verspiegelten Oberfläche reflektierten Streulichtes der Probe angeordnet ist.

Vorrichtungen der gattungsgemäßen Art erlauben nur Untersuchungen der Oberfläche von Proben, die keine Lichttransmission haben, also nur von stark reflektierenden oder stark absorbierenden Proben.

Bei transparenten Proben trifft der Lichtstrahl auch auf die Rückseite der Probe. Dort wird gleichfalls Streulicht erzeugt, das von der Probenrückseite reflektiert wird. Dieses von der Probenrückseite reflektierte Streulicht überlagert sich dem Streulicht, das von der Vorderseite der Probe reflektiert wird. Damit ist keine quantitative Messung oder Bestimmung des von der polierten Vorderseite der Probe ausgehenden Streulichtes möglich.

Aufgabe der Erfindung ist es, die Vorrichtung der gattungsgemäßen Art so auszubilden, daß auch bei einer transparenten Probe ausschließlich das integrale Streulicht gemessen werden kann, das von deren polierter Oberfläche ausgeht, auf die das einfallende Licht auftrifft.

Diese Aufgabe wird gemäß der Erfindung gelöst durch die im Patentanspruch 1 herausgestellten Merkmale.

Zweckmäßige Ausgestaltungen der Vorrichtung sind Gegenstand der Unteransprüche.

Die Erfindung ist in der Zeichnung mit Ausführungsbeispielen veranschaulicht und im Nachstehenden im einzelnen anhand der Zeichnung beschrieben.

Fig. 1 zeigt den schematischen Aufbau einer Apparatur zur Messung des integralen Streulichtes mittels einer Ulbricht-Kugel.

Fig. 2 zeigt den in Fig. 1 umrissenen Ausschnitt aus der Ulbricht-Kugel mit dem Probenträger.

Fig. 3 zeigt im Schnitt schematisch eine erfindungsgemäß ausgebildete Coblentz-Halbkugel.

Fig. 4 zeigt einen Schnitt durch eine verstellbare Halterung für die Probe, die in Verbindung mit einer Ulbricht-Kugel oder einer Coblentz-Halbkugel verwendbar ist.

Fig. 5 zeigt eine Draufsicht auf die Halterung nach Fig. 4.

Fig. 6 zeigt eine Seitenansicht mit einer gestrichelt dargestellten Kippstellung.

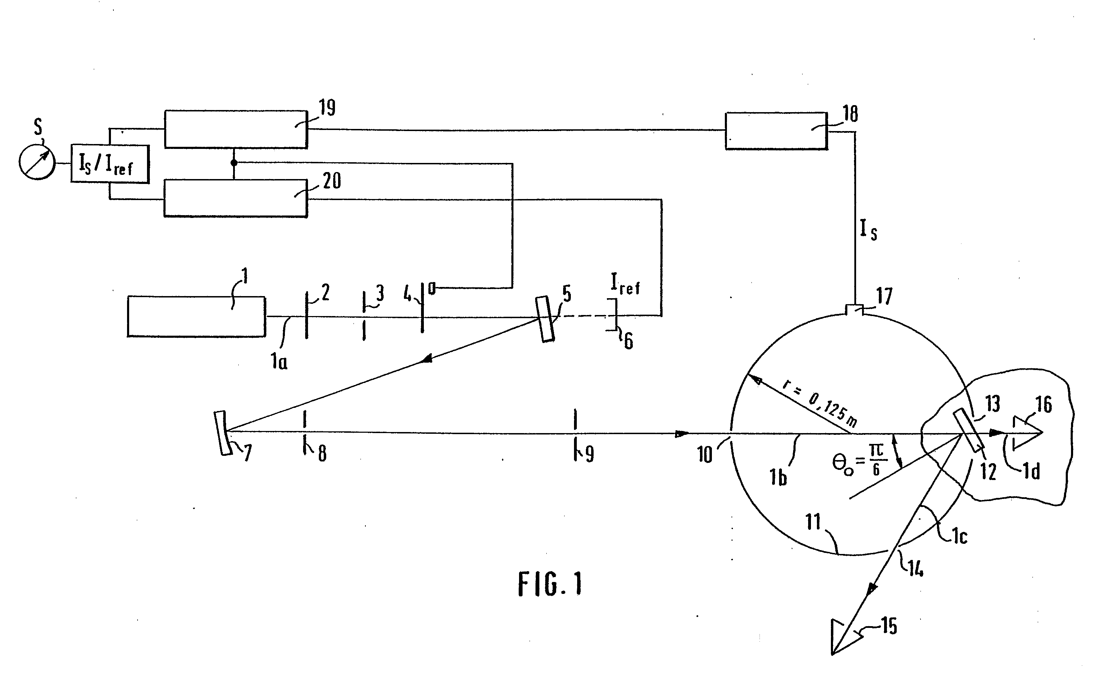

In Fig. 1 ist das Prinzip des Aufbaus und der Arbeitsweise einer Apparatur zur Messung des integralen Streulichtes mittels einer Ulbricht-Kugel dargestellt. Als Lichtquelle ist ein Laser 1, z.B. ein HeNe-Laser (die Wellenlänge hängt von der Meßaufgabe ab), vorgesehen. Der vom Laser ausgehende Lichtstrahl 1a wird entsprechend der Aufgabenstellung durch einen Polarisator 2 polarisiert, fällt durch eine Blende 3 und wird an einem Chopper 4 in Wechsellicht umgewandelt. Das Wechsellicht trifft auf einen Spiegel 5, von dem der überwiegende Teil des Lichtes reflektiert wird. Ein Teil des Lichtes durchdringt den Spiegel 5, fällt auf einen Fotodetektor 6, der ein Referenzsignal $I_{ref}$ abgibt. Das reflektierte Licht wird nochmals an einem Spiegel 7 reflektiert. Der Spiegel 7 ist ein Hohlspiegel mit einem Radius von 2 m. Der Lichtstrahl fällt danach durch zwei weitere Blenden 8, 9. Anschließend tritt er durch eine Einlaßöffnung 10 in eine Ulbricht-Kugel 11 ein.

Bei der Ulbricht-Kugel handelt es sich um eine Hohlkugel mit einem Radius von 0,125 m. Innen ist die Kugel mit einem nahezu ideal streuenden Material, z.B. Ba $SO_4$, beschichtet. Der Lichtstrahl fällt unter einem Winkel $\theta_0 = \pi/6$ auf die Probe 12, welche auf einem Probenträger in einer der Eintrittsöffnung 10 diametral gegenüberliegenden Kugelöffnung 13 montiert ist. Die Probe besteht aus einem transparenten optischen Glas, das wenigstens auf seiner dem einfallenden Lichtstrahl zugewandten Oberfläche, im folgenden "Vorderseite" genannt, in optischer Qualität poliert ist. Das an der Vorderseite der Probe 12 reflektierte Licht tritt aus der Kugel durch eine unter einem Winkel von $2\theta_0 = \pi/3$ zum eintretenden Strahl liegende Öffnung 14 und fällt in eine Lichtfalle 15. Das die Probe 12 durchdringende Licht gelangt durch die Öffnung 13 nach außen und fällt in eine Lichtfalle 16. Der Winkel $\theta$ ist zwischen 15° und 45° wählbar. Er beträgt vorzugsweise etwa 30°

Das in den gesamten Hohlraum der Kugel 11 gestreute Licht wird von der Ulbricht-Kugel integriert und vom Detektor 17 gemessen. Ober einen Vorverstärker 18 gelangt das Signal $I_s$ zur Verstärkung zu einem Lock-in-Verstärker 19. Das Referenzsignal $I_{ref}$ wird im Lock-in-Verstärker 20 verarbeitet. Beide Verstärker erhalten die Referenzfrequenz von Chopper 4. Anschließend wird der Quotient $I_s/I_{ref}$ gebildet, der ein Maß für das Streulicht S angibt und für die Beurteilung der effektiven Oberflächenrauhigkeit der polierten Vorderseite genutzt wird.

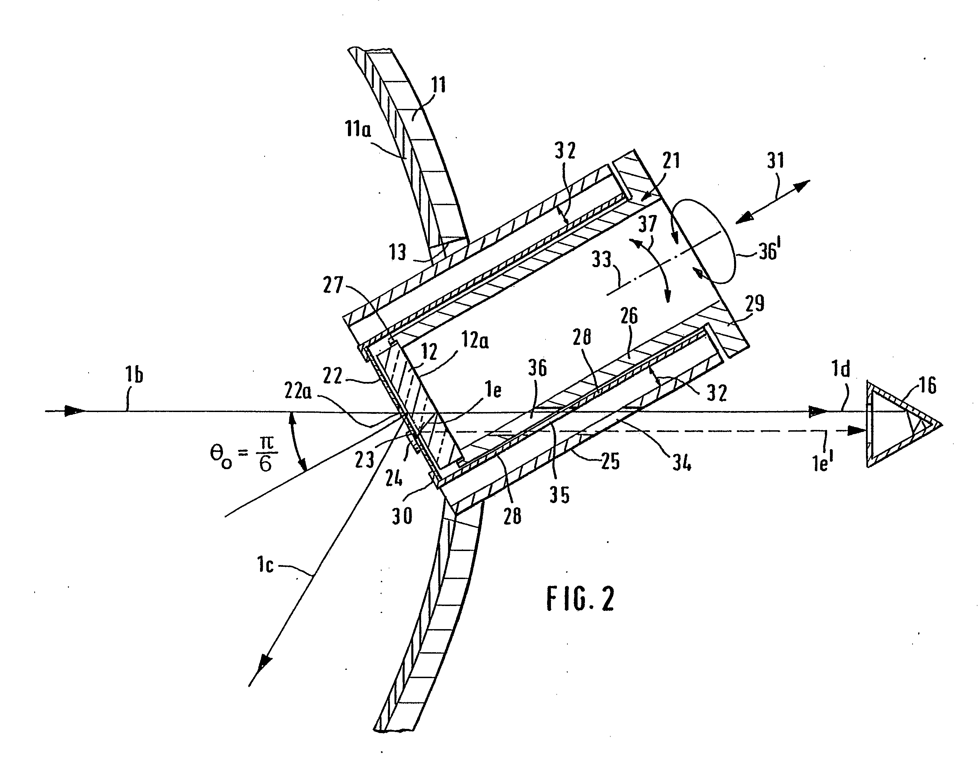

Der Lichtstrahlverlauf an der Probe und der Probenträger sind in Fig. 2 vergrößert wiedergegeben. Die Innenwand der Kugel 11 ist mit einer ideal streuenden Beschichtung 11a, vorzugsweise mit einer $BaSO_4$-Beschichtung versehen. Die aus einem lichtdurchlässigen Material bestehende Probe 12 ist mit Hilfe einer Haltevorrichtung 21 in der Kugelöffnung 13 montiert und mit einer Blende 22 abgedeckt, die in ihrer Mitte mit einer Öffnung 22a versehen ist, durch der die einfallende Strahl 1b auf die Probe auftrifft und der von der Probenoberfläche reflektierte Strahl 1c austritt. Die Blende 22 verhindert, daß von der Probenrückseite 23 reflektiertes Streulicht zurück in die Ulbricht-Kugel gelangt. Es wird damit ausschließlich das von der Probenvorderseite ausgehende Streulicht gemessen. Die Blende 22 besteht aus einer dünnen, runden Scheibe, deren Oberfläche das Laserlicht absorbierend ausgebildet ist und beispielsweise geschwärzt sein kann. In der Mitte der Blende ist eine scharfkantig ausgebildete runde Durchlaßöffnung 22a vorgesehen, die einen Durchmesser von ca. 1 mm haben kann. Der Außendurchmesser der Blende ist so groß, daß die zu vermessende Probe, die z.B. einen Durchmesser von etwa 25 mm haben kann, vollständig abgedeckt ist.

Das Licht wird bei einer lichtdurchlässigen Probe, wie schon oben beschrieben, an der Vorderseite der Probe zum Teil reflektiert und verläßt die Kugel durch die Öffnung 14. Das an der Probenvorderseite gestreute Licht gelangt vollständig in die Kugel und kann gemessen werden. Das von der Vorderseite in die Probe einfallende Licht trifft auf die Rückseite 23 der Probe und wird wiederum mit einem Strahlanteil 1d durchgelassen. Zum Teil wird das in die Probe einfallende Licht aber auch von der Probenrückseite - Strahlanteil 1e - und dann wieder auf der Probenvorderseite - Strahlanteil 1e' -reflektiert. Auch dabei wird Streustrahlung erzeugt.

Das meiste Licht wird bei allen Streuprozessen in Richtung des reflektierten Strahles gestreut. Die Blende 22 ist nun so ausgebildet, daß verhindert wird, daß der von der Probenrückseite reflektierte Strahlanteil 1e und das Streulicht der Probenrückseite in die Kugel gelangen kann.

Dazu ist die Blende 22 so ausgelegt und der Lichteinfallswinkel $\theta$ so gewählt, daß das an der Probenrückseite reflektierte Licht von der Blende aufgefangen wird. Um zu vermeiden, daß am Auftreffpunkt des reflektierten Strahlanteiles 1e an der Blende wiederum Lichtstreuung entsteht, ist für den Strahlanteil 1e eine Lichtfalle vorgesehen.

Bei der Ausführung nach Fig. 2 ist im Bereich des Auftreffpunktes des reflektierten Strahlaneiles 1e in der Blende eine weitere Öffnung 23 für diesen von der Rückseite der Probe reflektierten Lichtstrahl 1e angebracht. In Strahlrichtung hinter dieser Öffnung, also auf der Vorderseite der Blende ist eine Lichtfalle montiert. Diese Lichtfalle kann eine z.B. 0,3 mm dicke Silizium-Scheibe 24 sein, deren der Öffnung 23 zugewandte Oberfläche poliert und durch eine Beschichtung aus einem dielektrischen Material entspiegelt ist. Dieses Material hat vorzugsweise einen Brechungsindex n von etwa 2,0, wie er z.B. bei $Ta_2O_5$, $TiO_2$, $ZrO_2$ oder $Al_2O_3$ gegeben ist. Die Schichtdicke d ist dann so festzulegen, daß $n \cdot d = \lambda/4$, wobei die Wellenlänge des verwendeten Laserlichtes ist. Da die polierte Silizium-Scheibe im sichtbaren Spektralbereich einen Brechungsindex von n = 4,05 besitzt, hat sie ohne Entspiegelung eine Reflexion von etwa 0,30. Durch die Entspiegelung wird diese Reflexion auf bis zu 0,003 reduziert. Da Silizium einen Absorptionsindex k = 0,5 besitzt, wird durch die Entspiegelung erreicht, daß nahezu das gesamte auffallende Licht in dieser Lichtfalle absorbiert wird. Die an der Blende 22 als Lichtfalle montierte Silizium-Scheibe 24 sorgt also dafür, daß nahezu das gesamte an der Probenrückseite 23 reflektierte und gestreute Licht absorbiert wird. An der entspiegelten Silizium-Scheibe 24 wird keine Lichtstreuung erzeugt.

Die Blende 22 kann auch vollständig aus einer dünnen, beidseitig polierten Silizium-Scheibe gefertigt werden. Dabei werden zweckmäßig sowohl deren Vorderseite als auch deren Rückseite entspiegelt. Die ganze Blende wird damit zu einer Lichtfalle. Die zusätzliche Öffnung 23 in der Blende und die Silizium-Scheibe 24 als Lichtfalle ist dann nicht mehr nötig. Die Entspiegelung an der Vorderseite der Blende aus Silizium führt dazu, daß Licht, welches nicht zum direkten Lichtstrahl gehört, wie Streulicht von den Umlenkspiegeln der Apparatur oder an der Eintrittsöffnung 10 gebeugtes Licht, an der Vorderseite der Blende 22 absorbiert wird und damit die Messung nicht mehr verfälschen kann.

Die in Fig. 2 schematisch wiedergegebene Haltevorrichtung 21 weist ein Außengehäuse 25 auf, das in einem die Kugelöffnung 13 abdeckenden Flansch gelagert ist, der in Fig. 2 nicht dargestellt ist. Die Probe 12 ist an einem rohrförmigen Probenhalter 26 befestigt und beispielsweise in einen Rezeß 27 in dessen einer Stirnseite eingeklemmt. Die Probe liegt dabei an einer durch den Rezeß gebildeten Schulter an. Der Probenhalter 26 ist mit geringem Spiel in ein Innengehäuse 28 einschiebbar und an dem der Probe gegenüberliegenden Ende zur Handhabung des Probenhalters mit einem Flansch 29 versehen. Das Innengehäuse ist an seinem der Probe zugewandten Ende mit einem Innenflansch 30 versehen, auf dem hier die Blende 22 befestigt ist, die somit den Bewegungen des Innengehäuses relativ zum Außengehäuse folgt. Die Blende 22 kann aber auch feststehend an unteren Ende des Außengehäuses 25 befestigt sein. Das Innengehäuse mit dem darin befindlichen Probenhalter 26 ist im Außengehäuse 25 axial verschiebbar, wie durch den Doppelpfeil 31 angedeutet.

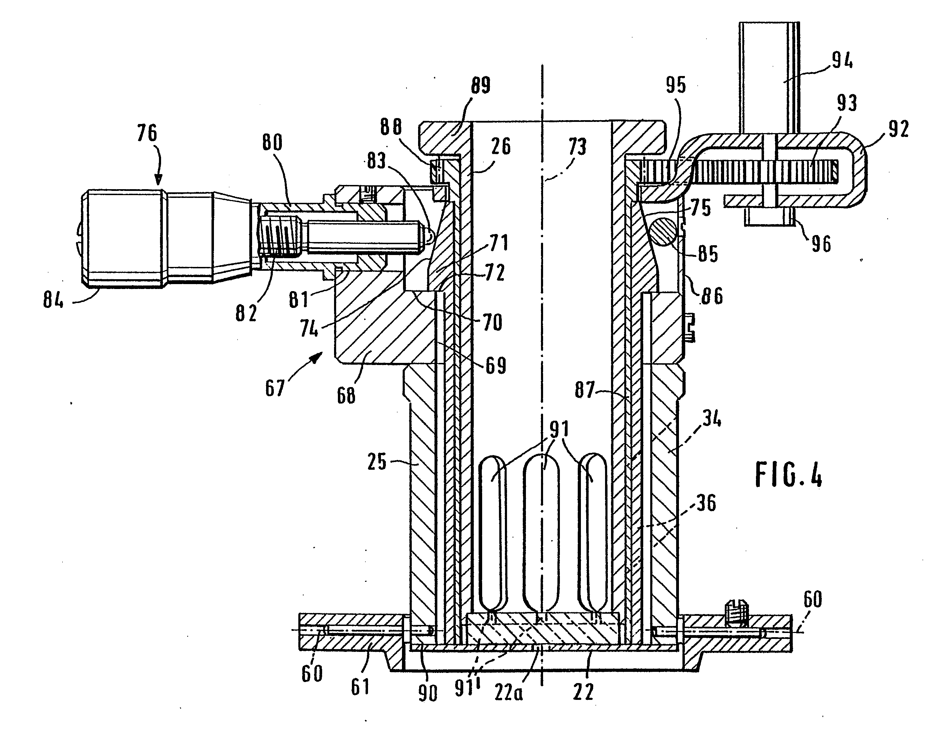

Das Innengehäuse 28 ist weiter im Außengehäuse zweidimensional quer verstellbar, wie durch die Doppelpfeile 32 angedeutet, und weiter unten unter Bezug auf Fig. 4 bis 6 beschrieben wird.

Das Außengehäuse 25 ist weiter in dem Abdeckflansch kippbar, und zwar um eine in Fig. 2 nicht dargestellte Achse, die senkrecht zur Zeichnungsebene steht und im wesentlichen durch den Auftreffpunkt des Lichtstrahles 1b auf die Probe 12 hin durchgeht - Doppelpfeil 37. Vorzugsweise ist der Probenhalter 26 mit dem Innengehäuse 28 um seine Achse 33 drehbar gelagert - Doppelpfeil 36.

In Richtung des einfallenden Strahles 1b sind das Außengehäuse 25, das Innengehäuse 28 und der Probenhalter 26 mit Öffnungen 34, 35, 36 versehen, durch der Strahlanteil 1d, der die Probe durchdrungen hat, hindurch fällt. Weiter tritt hier der Strahlanteil 1e' aus. Diese Strahlanteile 1d und 1e' werden dann in der Lichtfalle 16 aufgefangen. Wenn die Probe mit dem Probenhalter 26 im Innengehäuse 28 um die Achse 33 drehbar ist, wie durch den Doppelpfeil 36 angedeutet, muß im Probenhalter 26 eine der Zahl der vorgesehenen Drehlagen entsprechende Anzahl von Lichtdurchtrittsöffnungen 35, 36 vorgesehen sein.

Mit den verschiedenen Verstellmöglichkeiten entsprechend den Doppelpfeilen 31, 32, 36, 37 wird die Probe 12 auf dem Strahlengang des einfallenden Strahles 1b justiert. Durch die Schwenkbewegung des Außengehäuses 25 in dem nicht dargestellten Befestigungsflansch wird der Auffallwinkel $\theta_0$ eingestellt. Durch die axiale Verstellung in Richtung des Doppelpfeiles 31 und die zweidimensionale Verschiebung des Innengehäuses im Außengehäuse wird der Auftreffpunkt justiert bzw. werden für eine Reihenmessung die verschiedenen Meßpunkte eingestellt. Durch die Drehbarkeit ist es möglich, den Streulichtanteil bei unterschiedlichen Auffallrichtungen des auf die Probe auffallenden Strahles zu messen.

Dadurch, daß das Laserlicht unter einem großen Winkel (z.B. 30°) auf die Probe fällt und durch die Anordnung einer absorbierenden Lichtfalle an der Blende bzw. die Ausbildung der Blende als Lichtfalle wird erreicht, daß kein Falschlicht von der Rückseite der Probe in die Ulbricht-Kugel fällt. Es gelingt vollständig, dieses Licht auszublenden bzw. zu absorbieren. Dadurch wird ausschließlich das Streulicht der Probenvorderseite gemessen. Es ist damit möglich, das totale integrale Streulicht polierter Oberflächen von durchsichtigen Glasproben zu messen und daraus Rückschlüsse auf die Oberflächenqualität bzw. die Güte ihrer Politur zu treffen.

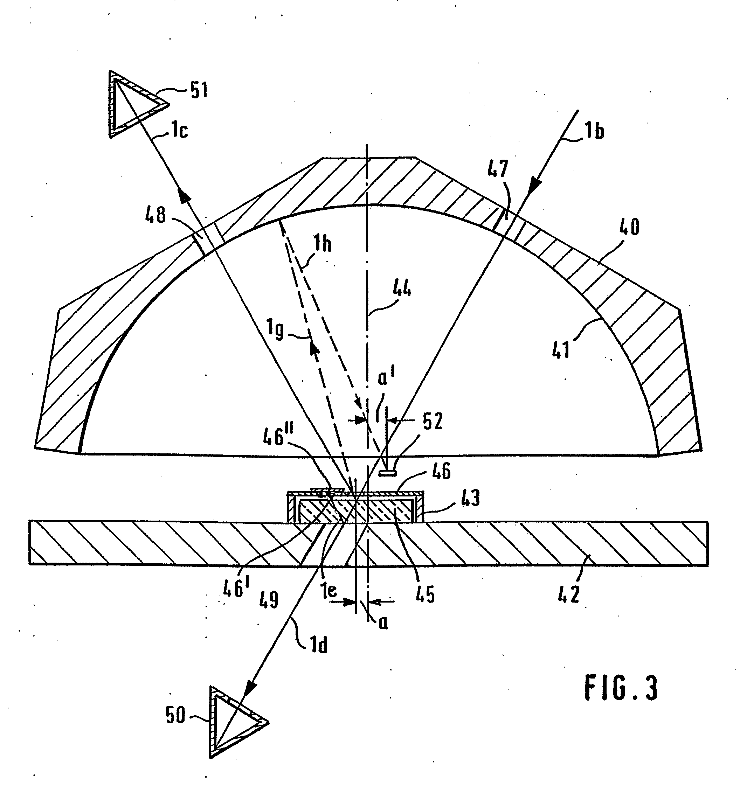

In Fig. 3 ist als weitere Vorrichtung zur Messung der integralen Streustrahlung eine Coblentz-Halbkugel schematisch dargestellt. Diese Coblentz-Halbkugel weist einen Körper 40 auf, der auf seiner Innenseite 42 als vollständige oder nahezu vollständige Halbkugel ausgebildet ist. Die Kugeloberfläche 41 ist dabei für die Erzielung einer möglichst hohen Reflektivität verspiegelt. Der auf seiner Innenseite als Halbkugel ausgebildete Körper 40 liegt dabei über einer Tragplatte 42, auf der eine Probenhalterung 43 angeordnet ist, und zwar so, daß sie wenigstens zweidimensional quer zur Achse 44 der Halbkugelfläche 41 verstellbar ist. Die Probe 45 ist auf ihrer Oberseite durch eine Blende 46 abgedeckt, die in gleicher Weise ausgebildet sein kann wie sie oben unter Bezug auf Fig. 2 beschrieben ist.

In dem Körper 40 ist eine Öffnung 47 für den einfallenden Strahl 1b und eine zweite Öffnung 48 für den von der Probenvorderseite reflektierten Strahl 1c vorgesehen. Die beiden Strahlen 1b und 1c schließen zwischen sich den Winkel $2\theta$ ein. In Verlängerung des einfallenden Strahles 1b ist in der Trägerplatte 42 eine Öffnung 49 für den durch die Probe 45 hindurchtretenden Strahl 1d vorgesehen, in dessen Strahlengang eine Lichtfalle 50 angeordnet ist. Eine weitere Lichtfalle 51 liegt im Strahlengang des Strahles 1c.

Der Auftreffpunkt des einfallenden Strahles 1b auf der Probenvorderseite liegt um den Betrag a seitlich gegen die Halbkugelachse 44 versetzt. Mit etwa gleichem Versatz a' gegen die Halbkugelachse 44 ist ein Fotodetektor 52 im Brennpunkt des von der Probenvorderseite ausgehenden Streulichtes angeordnet. Dieses Streulicht ist beispielsweise mit einem ausgehenden Streulichtanteil 1g und einem reflektierten Streulichtanteil 1h wiedergegeben. Mit der beschriebenen Anordnung wird das gesamte Streulicht, das von der Kugeloberfläche 41 reflektiert wird, auf den Fotodetektor 52 fokussiert, so daß dieser Fotodetektor einen Meßwert abgibt, der der integralen Streulichtstrahlung entspricht. Die Apparatur mit der Coblentz-Halbkugel ist im übrigen entsprechend der Apparatur nach Fig. 1 aufgebaut.

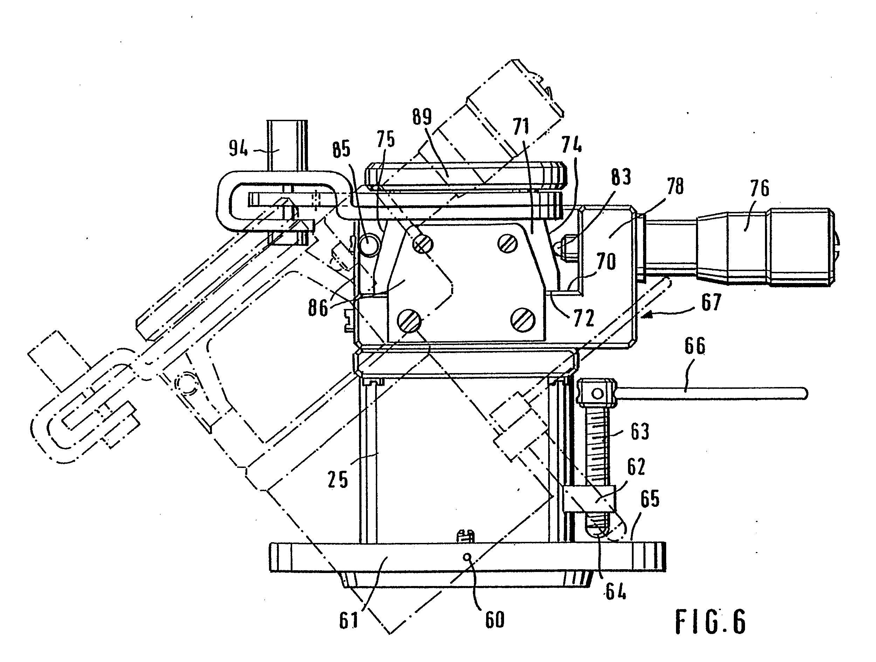

Die oben unter Bezug auf Fig. 2 beschriebene Haltevorrichtung 21 ist in einer praktischen Ausführungsform in Fig. 4 bis 6 dargestellt. Für die Teile, die oben unter Bezug auf Fig. 2 bereits beschrieben sind, werden hier die gleichen Bezugszeichen verwendet. Das Außengehäuse 25 ist um eine Achse 60 schwenkbar in dem oben erwähnten, aber in Fig. 2 nicht dargestellten Flansch 61 gelagert. Auf der Außenseite des Außengehäuses 25 ist eine Gewindemutter 62 befestigt, in der eine Schraube 63 drehbar gelagert ist, die mit einem abgerundeten Kopf 64 auf der Oberseite 65 des Flansches 61 aufliegt und über einen Handgriff 66 betätigbar ist. Eine Extremstellung des Außengehäuses 25 mit der darauf angeordneten Verstellvorrichtung 67 ist in Fig. 6 gestrichelt dargestellt.

Mit der Verstellvorrichtung 67 können die in Fig. 2 dargestellten zweidimensionalen Querbewegungen entlang den Pfeilen 32 und senkrecht dazu, die Drehbewegung entsprechend dem Pfeil 31 und die Bewegung in Achsrichtung entsprechend dem Doppelpfeil 31 durchgeführt werden. Die Schwenkbewegung um die Achse 60 ist die Bewegung entsprechend dem Doppelpfeil 37 in Fig. 2.

Die Verstellvorrichtung 67 weist einen Grundkörper 68 auf, der mit einer dem Innendurchmesser des Außengehäuses 25 entsprechenden Bohrung 69 versehen ist. Quer zur Bohrungsachse ist eine Gleitfläche 70 vorgesehen. Das Innengehäuse 28 ist mit einem Kopfteil 71 mit einer viereckigen Grundfläche 72 versehen, die sich unter einem Winkel von 90° zur Achse 73 des Innengehäuses 28 erstreckt. Mit der Fläche 72 ist das Innengehäuse 28 zweidimensional verschiebbar auf der Gleitfläche 70 gelagert. Der Kopf 71 des Innengehäuses 28 weist weiter gegenüberliegende Schrägflächen 74, 75 auf, die jeweils paarweise um 90° verletzt an dem Kopf 71 ausgebildet sind. Für die Querverstellung sind zwei um 90° gegeneinander versetzte Stellschrauben 76, 77 vorgesehen, die als übliche Mikrometerschrauben ausgebildet sein können.

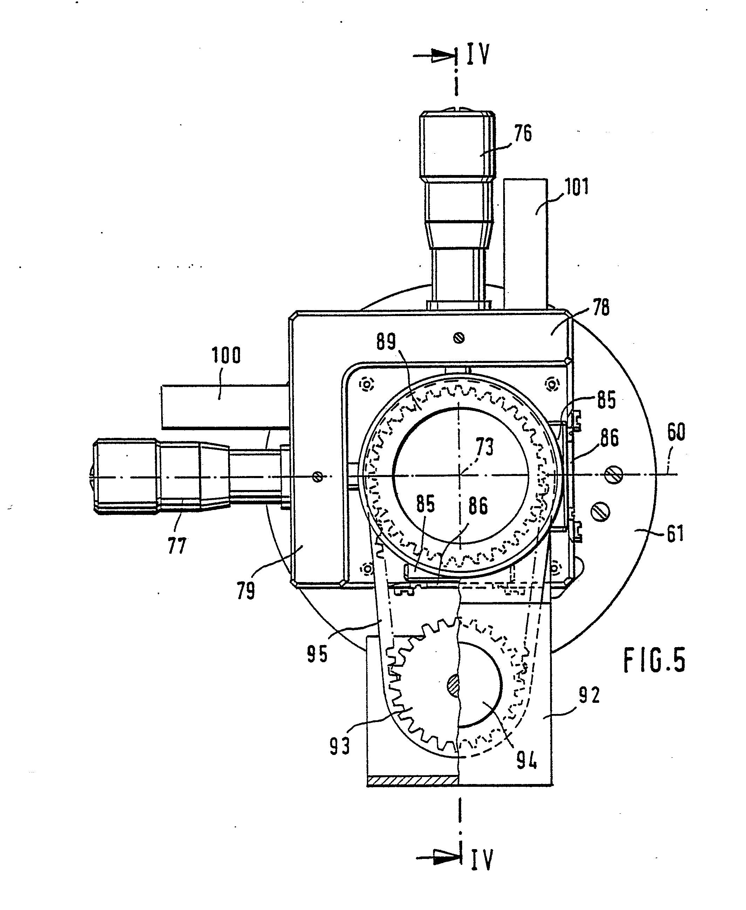

Diese Stellschrauben sind in den aufrechten Wandungen 78, 79, angeordnet, die sich über die Gleitfläche 70 des Grundkörpers 68 nach oben erstrecken und, wie aus Fig. 5 ersichtlich, einen Winkel bilden können.

Die Mikrometerschrauben sind, wie in Fig. 4 dargestellt, mit ihren Gehäusen 80 in Bohrungen 81 der Wandungen 78, 79 eingesetzt. Die Gewindespindel 82 liegt mit einem Kugelkopf 83 gegen die Schrägfläche 74 an und wird über einen Handgriff 84 betätigt. Dabei können zwischen der Gewindespindel und dem Handgriff auch noch Untersetzungsgetriebe angeordnet sein.

Gegen die gegenüberliegende Schrägfläche 75 liegt ein zylindrischer Stift 85 an, der an einer Blattfeder 86 befestigt ist und sich mit seiner Achse quer zu der Schrägfläche 75 erstreckt. Diese Anordnung mit der Feder 76 und dem Stift 85 bildet die Gegenkraft, mit der das Innengehäuse 28 in Anlage an dem Kugelkopf 83 der Gewindespindel 82 gehalten wird. Durch die Schrägflächen 74, 75 wird schließlich der Kopf 71 mit seiner Gleitfläche 72 in Anlage an der Gleitfläche 70 gehalten.

Bei der Ausführungsform nach Fig. 4 und 5 ist in dem Innengehäuse 28 eine Zwischenbuchse 87 drehbar gelagert. Diese Zwischenbuchse trägt an ihrem oberen Ende einen Zahnring 88, an dem, wie weiter unten noch zu beschreiben sein wird, ein Drehantrieb angreift.

In der Zwischenbuchse 87 ist der rohrförmige Probenhalter 26 gelagert, der an seinem oberen Ende einen Betätigungsring 89 trägt. Am unteren Ende des Probenhalters 26 ist der Rezeß 27 für die Aufnahme der Probe 12 vorgesehen. Die Blende 22 mit ihrer mittleren scharfkantigen Öffnung 22a ist hier an der unteren Stirnseite 90 des Außengehäuses 25 befestigt. Damit liegt die Blendenöffnung 22a jeweils konzentrisch um den Auffallpunkt des Lichtstrahles und bewegt sich nicht, wie oben unter Bezug auf Fig. 2 beschrieben, zusammen mit der Probe.

In den Wandungen des Außengehäuses 25 und des Innengehäuses 28 sind jeweils die Durchlaßöffnungen 34, 36 für den Durchgang des die Probe durchdringenden Lichtstrahlanteiles 1d vorgesehen, die hier aus Gründen der Übersichtlichkeit der Zeichnung um 90° gegen die Achse 60 versetzt dargestellt sind.

Das Innengehäuse 28 und die Zwischenbuchse 87 sind jeweils mit einer Mehrzahl von länglichen Öffnungen 91 versehen. Bei der dargestellten Ausführungsform sind sechs solcher Öffnungen vorgesehen, durch die der Lichtstrahl in sechs fest vorgegebenen Drehstellungen des Probenträgers hindurchfallen kann. Zwischen der Zwischenbuche 87 und dem Probenträger 26 sind dabei Indexmittel vorgesehen, mit denen sichergestellt ist, daß die Öffnungen des Innengehäuses 28 und der Zwischenbuchse 87 jeweils miteinander fluchten. In dem Probenträger 26 können die Öffnungen 91 über Schlitze 92 zur Stirnseite des Probenträgers hin offen sein. Auf diese Weise ist das untere Ende des Probenträgers mit federnden Zungen ausgebildet, über die die Probe in dem sie aufnehmenden Rezeß 27 gehaltert ist.

Auf der Oberseite des Kopfes 71 des Innengehäuses 26 ist eine Halterung 93 befestigt, die hier gegenüber der Mikrometerschraube 76 liegt und seitlich über den Grundkörper 68 vorsteht. In dieser Halterung ist eine Riemenscheibe 93 drehbar gelagert, die von einem Motor 94 angetrieben ist. Mittels dieser Riemenscheibe 93, die wiederum als außengezahnte Scheibe ausgebildet sein kann, wird über einen Zahnriemen 95, der mit dem äußeren Zahnring 88 der Zwischenbuchse 8-7 zu sammenwirkt, die Zwischenbuchse 87 und der darin gelagerte Probenhalter 26 drehbar. Der jeweilige Drehwinkel ist über einen Winkelgeber 96 auslesbar, der mit der Riemenscheibe 93 von dem Motor 94 angetrieben wird. Der Motor 94 ist als Schrittmotor ausgebildet, über den die Drehlagen des Probenhalters 26 angefahren werden, die durch die Anzahl der Öffnungen 91 im Probenhalter 26 und der Zwischenbuchse 87 vorgegeben sind.

Auch die Mikrometerschrauben 76 können mit Schrittmotoren als Antrieb versehen sein. Zur Bestimmung der jeweiligen Lage sind dann Wegaufnehmer 100, 101 vorzusehen, die parallel zur Achse der Verstellvorrichtungen 76, 77 anzuordnen sind und mit einem Fühler gleichfalls gegen die Schrägflächen des Kopfes 71 anliegen.

Mit den beschriebenen motorischen Antrieben und den Weg- bzw. Winkelaufnehmern lassen sich bestimmte Prüfprogramme für die Proben vorprogrammieren und durch dieses Programm gesteuert durchführen.

Ein Probenwechsel kann durch einfaches Herausziehen des Probenhalters 26 durchgeführt werden. Die Probe braucht dann lediglich aus dem Rezeß 27 herausgenommen und eine neue Probe eingesetzt zu werden.

**Ansprüche**

1. Vorrichtung zur Bestimmung der effektiven Oberflächenrauhigkeit polierter optischer Proben durch Messung der integralen Streustrahlung mit einem verstellbaren Träger für die Probe, einer Laserlichtquelle, von der ein Lichtstrahl unter einem Winkel zwischen 15° und 45° auf die Probenoberfläche gerichtet wird, einer Lichtfalle für den von der Probenoberfläche reflektierten Lichtstrahl, einer Vorrichtung zum Messen des von der Probenoberfläche reflektierten Streulichtes mit einem Lichtdetektor und einer Anzeigevorrichtung für das gemessene Streulicht, dadurch gekennzeichnet, daß für die Bestimmung der effektiven Oberflächenrauhigkeit transparenter Proben der Probenträger (26) in Richtung des einfallenden Stahles (1b) mit einer Öffnung (36) in Richtung des an der Rückseite der transparenten Probe (12) austretenden Strahles (1d) und hinter dieser Öffnung mit einer Lichtfalle (16) versehen ist und daß für die Probe am Probenträger eine Abdeckblende (22) mit einer Öffnung für den einfallenden Strahl und den von der Probenoberfläche reflektierten Strahl vorgesehen ist, die wenigstens im Bereich des von der Rückseite der transparenten Probe reflektierten Strahlanteiles lichtabsorbierend ausgebildet ist.

2. Vorrichtung nach Anspruch 1, gekennzeichnet durch die Verwendung einer das Streulicht integrierenden Ulbricht-Kugel, die auf ihrer Innenseite mit einem ideal streuenden Material beschichtet ist und mit einer ersten Öffnung für den Lichtstrahleintritt und einer zweiten Öffnung für den den Austritt des von der Probenoberfläche reflektierten Strahles und einem verstellbaren Träger für die Halterung der Probe im Bereich der Kugelwandung versehen ist sowie einen in der Kugelwandung angeordneten Detektor für das integrale Streulicht aufweist.

3. Vorrichtung nach Anspruch 1, gekennzeichnet durch die Verwendung einer Coblentz-Halbkugel, die auf ihrer Innenseite verspiegelt ist und mit einer ersten Öffnung für den Lichtstrahleintritt und einer zweiten Öffnung für den Austritt des von der Probe reflektierten Strahles versehen ist, in der der Lichteinfallspunkt auf der Probe seitlich gegen die Halbkugelachse versetzt liegt und der Detektor im Brennpunkt des von der verspiegelten Oberfläche reflektierten Streulichtes der Probe angeordnet ist.

4. Vorrichtung nach Anspruch 1, dadurch gekennzeichnet, daß die Abdeckblende (22) im Bereich des von der Probenrückseite (12a) reflektierten Strahles (1e) mit einer Öffnung (23) versehen ist, die mit einer Lichtfalle (24) abgedeckt ist.

5. Vorrichtung nach Anspruch 4, dadurch gekennzeichnet, daß als Lichtfalle für die an der Probenrückseite (12a) reflektierte Strahlung eine polierte Silizium-Scheibe (24) vorgesehen ist, die wenigstens auf der der Öffnung zugewandten Oberfläche mit wenigstens einer dielektrischen $\lambda/4$-Schicht entspiegelt ist.

6. Vorrichtung nach Anspruch 1, dadurch gekennzeichnet, daß die Abdeckblende wenigstens auf der der Probenoberfläche zugewandten Oberfläche mit wenigstens einer dielektrischen $\lambda/4$Schicht entspiegelt ist.

7. Vorrichtung nach Anspruch 5 oder 6, dadurch gekennzeichnet, daß eine $\lambda/4$-Beschichtung aus einem dielektrischen Material mit einem Brechungsindex $n \approx 2$ vorgesehen ist.

8. Vorrichtung nach Anspruch 7, dadurch gekennzeichnet, daß die Beschichtung aus $Ta_2O$, $TiO_2$, $ZrO_2$ oder $Al_2O_3$ besteht.

9. Vorrichtung nach einem der Ansprüche 1 bis 3, dadurch gekennzeichnet, daß der Probenträger mit einem Außengehäuse (25) in einem Flansch gelagert ist, der die Öffnung für den an der Rückseite der Probe austretenden Strahl umgibt, und daß in dem Außengehäuse (25) ein Innengehäuse mit einer Probenhalterung gelagert ist, das in dem Außengehäuse (25) in zwei rechtwinklig zur Achse (33) der Probenhalterung und rechtwinklig zueinander verlaufenden Richtungen verstellbar angeordnet ist, und daß das Innengehäuse und das Außengehäuse in Richtung des durch die Probe hindurchtretenden Strahles (1d) mit Lichtdurchlaßöffnungen (34, 35) versehen sind.

10. Vorrichtung nach Anspruch 9, dadurch gekennzeichnet, daß das Außengehäuse (25) in dem Flansch um eine Achse schwenkbar ist, die durch den Auftreffpunkt des einfallenden Strahles (1b) auf die Probenoberfläche hindurchgeht und senkrecht durch den Scheitel des Winkels ($\theta$) zwischen dem ein- und ausfallenden Strahl (1b - 1c) verläuft.

11. Vorrichtung nach Anspruch 9 oder 10, dadurch gekennzeichnet, daß eine der Verstellrichtungen (32) des Innengehäuses (28) zum Außengehäuse (25) senkrecht zur Schwenkachse, die andere Verstellrichtung in Richtung der Schwenkachse verläuft.

12. Vorrichtung nach Anspruch 9, dadurch gekennzeichnet, daß der Probenhalter (26) um seine Achse (33) drehbar im Innengehäuse gelagert ist und daß in seiner Wandung eine Mehrzahl von Strahldurchtrittsöffnungen (36) vorgesehen ist.

FIG. 1

$$\theta_o = \frac{\pi}{6}$$

FIG. 2

EP 0 360 150 A2

FIG.3

EP 0 360 150 A2

FIG.4

FIG.5

FIG.6